# EUROPEAN PATENT APPLICATION

(11) **EP 0 608 844 A1**
(43) Date of publication of application: **03.08.1994**
(21) Application number: 94101073.8
(22) Date of filing: 25.01.1994
(51) Int. Cl.: B01J 2/16, B01J 2/00

(54) **Method of granulation and apparatus therefor**

(30) Priority: 26.01.1993 JP 10311/93
(71) Applicant: Freund Industrial Co., Ltd., Tokyo 160 (JP)
(72) Inventor: Morino, Jiro, c/o FREUND INDUSTRIAL CO., LTD., Tokyo (JP); Myo, Nagayoshi, c/o FREUND INDUSTRIAL CO., LTD., Tokyo (JP); Kurita, Kaoru, c/o FREUND INDUSTRIAL CO., LTD., Tokyo (JP); Shichijo, Isaku, c/o FREUND INDUSTRIAL CO., LTD., Tokyo (JP)
(74) Representative: Hering, Hartmut, Dipl.-Ing.

(57) **Abstract**

At the bottom of a granulating vessel being circular in horizontal section, a rotary disk having a circular edge portion concentric with the circle of the section of the vessel is provided, and the rotary disk is rotated while air is delivered into the vessel through a slit formed between the inner wall of the vessel and the edge portion of the rotary disk , and a powder and a binder liquid are supplied to perform granulating, while particles as nuclei are centrifugally fluidized.

The supplies of the powder and the binder liquid are performed in such a manner that a liquid/solid ratio on the surface of the nucleus particle, which is calculated considering the moisture supplied into the vessel by the air delivered into the vessel and the moisture discharged from the vessel along with the exhaust of the air, has a value satisfying a predetermined program.

## Description

### BACKGROUND OF THE INVENTION

### 1. Field of the Invention

This invention relates to a technique of granulation, and more particularly to a method of manufacturing spherical particles used for producing pharmaceuticals, foods and the like, a method of coating powder onto these spherical particles as nuclei, and granulated articles obtained through this method.

### 2. Related art Statement

A centrifugal fluidizing granulating-coating apparatus has been utilized for a long time for spherical granulation and for forming a coating layer on a spherical particle, and available in the market, for example, by a trade name of "CF-Granulator (Centrifugal Fluidizing type Granulator)" from Freund Industrial Co., Ltd. in Tokyo, Japan.

Among the methods of granulating by use of the above-described apparatus, there are (1) a method wherein powder is charged and a binder is sprayed, whereby the powder itself coheres, and (2) a method wherein particles as nuclei are charged and powder and a binder liquid are supplied thereto so that the powder adheres to the nuclei. In the case where spherical granules are to be efficiently manufactured and in the case of "powder coating" where powder of pharmaceutical or the like is made to adhere onto the spherical granules, the latter method (2) is generally adopted, and the present invention also belongs to this method.

In this granulation technique, one of the most important problems resides in how uniformly size of particles or thickness of coating layers of the finished products can be controlled. In this respect, theories and detailed analyses have been published (for example, Y. Funakoshi et al, "Powder Technology" Vol. 27, (1980), page 13 - 21, and Nagayoshi Myo, "Gekkan Yakuji" (in Japanese) Vol. 31, No. 11, (1989), page 83 - 89).

In the practical production, on the basis of the results of these theories and analyses, a suitable ratio between a powder and a binder liquid and supplying rates of the powder and the binder liquid have been determined, and employed.

If, however, calculations obtained on the basis of the above-described theory and analyses are used as they are, such disadvantages are presented that distribution of the product size is wide, and a yield is low, and, in the extreme cases, agglomerations are produced, and adhesion of the powder to an inner wall of a granulating vessel is increased, and so forth. Therefore, the calculation results cannot be utilized for the practical use as they are.

This can be concluded from the fact that, in Y. Funakoshi, wetness of the powder in the system is frequently measured and fed back to adjust the supplying rate of the binder liquid.

For this reason, in practice, supplying rates of the powder and the binder liquid are adjusted to increase or decrease through visual inspection of features of the particles in the granulating vessel and a state of the system. This, however, requires skill and labor, and, in particular, careful attention is required from the viewpoint of "Good Manufacturing Practice (GMP)", providing management and cost problems.

Furthermore, in the above-described articles and Japanese Patent Publication No. 54-992, which corresponds to U.S. patent No. 4,034,126, there is disclosed a method in which, in order to automate the operation, wetness of the powder in the granulating vessel is measured through an electric conductivity using an electrode, and in accordance with this measurement, the supplying rate of the binder liquid is increased or decreased, the time of pausing to supply the binder liquid is adjusted or so forth, so that the ratio between the powder and the binder liquid can be properly maintained.

In the feedback control using the electrode which measures the electric conductivity, as the supply of the powder proceeds, the powder adheres to the electrode, thus, producing errors in measured values, and correct control becoming impossible.

A wetness meter using infrared rays has similar disadvantage. In addition to this, there are types of powder, in which wetness can not be measured correctly by this method.

Further, when a powder has a high solubility in water like powder sugar, the powder dissolves in water and is transformed to liquid state, so that control cannot be performed only by measuring the wetness, thus being very far from the practicability.

Accordingly, the granulating operation like this cannot get rid of the control resorting to the manual operation as described above, thus presenting the obstacles against automated and unmanned operation of a factory.

Furthermore, methods wherein the supplying rate of the binder liquid is increased or decreased by an extreme degree, or the supply is interrupted temporarily as in the Patent Publication No. 54-992 present such disadvantages that the powder which has adhered onto the particle forms layers like annual rings and tends to peel off easily.

It is an object of the present invention to provide a granulating-coating technique capable of obtaining granulated articles having satisfactory uniformity in the particle diameter.

It is another object of the present invention to provide a technique capable of performing granulating-coating at the optimal liquid/solid ratio.

The inventors of the present invention have made extensive study for improving the above-described state of the art to establish an automatic operation system for granulation which is industrially practicable, thus achieving the present invention.

That is, the inventors of the present invention have investigated thoroughly the cause that the program control based on the above-described calculations cannot be put into operation unless the adjustment by the feedback is accompanied. As a result, they have found that there is large influence of moisture accompanied by gas delivered into the granulating vessel through a slit formed between the inner wall of the granulating vessel and an edge portion of a rotary disk, and of moisture lost along with the gas exhausted from the granulating vessel, so that, if the proper control is made taking this influence into consideration, the whole process can be automated by program-control without relying on the feedback control through the detection of wetness, which has many problems in practical use, thus completing the present invention.

As an apparatus for effectuating the method of the present invention, there can be used granulating-coating apparatuses of a centrifugal fluidizing type or a centrifugal tumbling type, having a construction, inwhich, at the bottom portion of a granulating vessel being a circle in horizontal section, there is provided a rotary disk having a circular edge portion concentric with the granulating vessel, and gas can be delivered into the granulating vessel through the slit formed between the inner wall of the granulating vessel and the edge portion of the rotary disk.

Usually, the granulating vessel is of a cylindrical shape, an inverted truncated cone shape, a cup shape, or a shape, in which some of the above-described shapes are combined together, and it is optional to adopt one having an open top, one having a partially air-permeable lid, one having a bag filter, one communicated with a cyclone or a bag filter through an exhaust tube, or the like. Furthermore, gas for drying can be introduced through a portion of the side wall of the granulating vessel.

The rotary disk may be a flat disk, however, usually, there is often used one of a tray shape with slightly raised edge portion, having a mountain-shaped convex portion at the center thereof. The rotary disk may be partially provided with an air-permeable screen, small holes, fine slits or the like.

The width of the slit formed between the inner wall of the granulating vessel and the edge portion of the rotary disk depends on the size of the granulating vessel, and usually ranges from 0.2 to 5 mm. Further, the width can be made variable depending on articles to be treated.

A baffle means, a projection or a groove can be provided to the inner wall of the granulating vessel or the rotary disk for helping tumbling and fluidizing of the treated articles, however, usually, the rotary disk being flat and smooth at a portion contacting powder is used.

A powder supply device and a device for supplying a binder liquid are provided to the granulating vessel. The methods of supplying the powder and the binder liquid are optional; a scattering device and a spraying device may be provided within the granulating vessel or mounted on the wall of the apparatus, or holes may be formed in the wall of the apparatus to blow out the powder and the binder liquid. Whatever method may be employed, it is necessary that supply at a constant rate is possible.

In order to effectuate the granulating method according to the present invention, one of the above-described devices is used, the rotary disk is rotated, and a powder and a binder liquid are supplied while a gas is delivered into the granulating vessel through the above-described slit to centrifugally fluidize the particles as nuclei. In order to form a satisfactory powder layer on the particle as being the nucleus, it is necessary that a liquid/solid ratio is proper.

The liquid/solid ratio according to the present invention is defined to be a volume ratio between liquid and solid which actually exist on the surface of the particle as being the nucleus. The liquid refers to the binder liquid adjusted with a difference between moisture supplied by the delivered gas and moisture taken away by the exhausted gas, and when the powder is dissolved in the binder liquid, the binder liquid refers to the quantity (volume) of the liquid when the liquid becomes a saturated solution of the powder at the temperature at that time. The quantity of the solid is the total quantity of the powder after deduction of the quantity of the powder dissolved in the liquid. In the above-described articles (Y. Funakoshi et al, and Nagayoshi Myo) etc., there is described that the liquid/solid ratio is an important factor during the granulating, however, it is the fact found first by the present inventors that the influence by the delivered and exhausted gases presents a subject for control, and, taking this influence into consideration, the feedback control through the detection of the wetness of the powder in the granulating vessel can be dispensed with.

In one method for effectuating the present invention, the temperatures and the moistures of the delivered gas and the exhausted gas are measured. If the exhausted gas can be deemed as saturated with water vapor, the moisture of the exhausted gas does not need to be measured. From these results, the absolute humidity of the exhausted gas is calculated, and the effect of the delivered and exhausted gases and the quantity of the moisture evaporated within the vessel is calculated to maintain the liquid/solid ratio at a proper value. In another method, instead of measuring the temperature and the moisture of the delivered gas, the gas which has passed through a blower is cooled and dehumidified, and, if necessary, heated and/or moistened, whereby the gas of substantially constant temperature and moisture is delivered. The latter method is simple and reliable.

Incidentally, as the proper liquid/solid ratio, the values described in the above articles are standard ones, however, the proper liquid/solid ratio should not be limited to these values, and other values may be proper depending on the types of the binder liquid and powder used, and a better result may be obtained when, along with the progress of the granulating process, the liquid/solid ratio is changed in accordance with a predetermined program.

According to the present invention, in the above-described method wherein the temperature and the moisture of the gas are measured, either one of the powder and the binder liquid is continuously supplied in accordance with a predetermined program, and the other is supplied according to a result of calculation such that the liquid/solid ratio is maintained properly.

In the method wherein the delivered gas is maintained at the constant temperature and moisture, both the powder and the binder liquid are continuously supplied in accordance with a predetermined program.

Intermittent supply decreases the production efficiency, and causes peel-off due to forming of the above-described multilayer construction and causes generation of agglomeration, thus resulting in unfavored product quality. Here, however, "continuous supply" refers to a mode of supply as a factor of the control method or the control means. The present invention includes the case where the operation is interrupted due to some other reason, and, the case where a particle is obtained by superposing a variety of powders on one another to produce sustained release preparations, provided that the regular operating conditions resort to the continuous supply.

Furthermore, it is not preferable that, even in this continuous supply, the quantity of supply fluctuates too much, and, it is favorable that the supplying rate is constant or increased continuously or stepwise in accordance with a program. Of course, it does not exclude the fluctuations caused by the control which adjust the practical value of the supplying rate in comparison with the programed one.

To apply the present invention, no restriction is imposed on the nucleus, powder and binder liquid. The present invention is preferably applied to the case where, spherical granules made of sucrose or made of sucrose and starch (Nonpareil, obtainable from Freund Industrial Co., Ltd.) and the spherical granules made of crystalline cellulose, lactose and the like are manufactured, and, also to the case where pharmaceuticals are powder-coated using these spherical granules as nuclei to form spherical granules of pharmaceutical preparations such as sustained release preparations.

### BRIEF DESCRIPTION OF THE DRAWING

The above-described and other objects, and novel features will become apparent more fully from the description of the present invention in conjunction with the accompanying drawing.

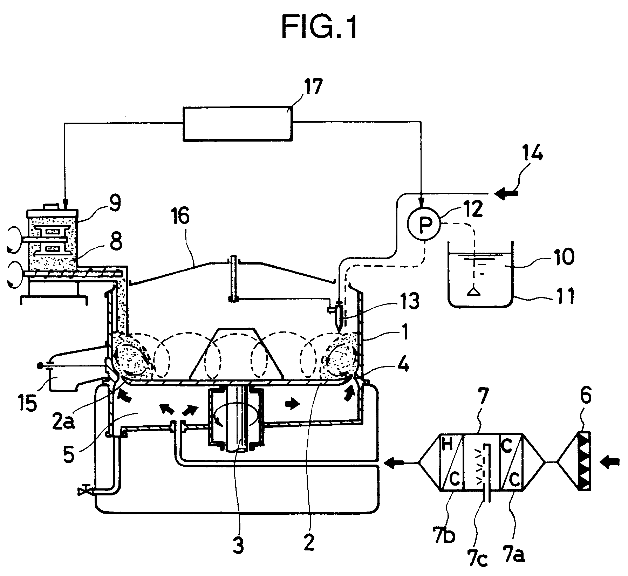

Fig. 1 is a sectional view showing one embodiment of the granulating apparatus for effectuating the granulating method according to the present invention.

Referring to the drawing, a granulating apparatus in this embodiment has a construction of a so-called centrifugal fluidizing type or centrifugal tumbling type granulating-coating apparatus.

In this granulating-coating apparatus, a granulating vessel 1 is of a cylindrical construction having a circular horizontal section.

A rotary disk 2 is horizontally provided on the bottom of the vessel 1, and is rotatable about a rotary shaft 3. A circular edge portion 2a of the rotary disk 2 is concentric with the circle of the horizontal section of the vessel 1, and an annular slit 4 is formed between the edge portion 2a and the inner wall of the vessel 1.

Below the rotary disk 2, is formed an air chamber 5, into which air is supplied through a blower, not shown, a prefilter 6 and an air conditioner 7, and the air is delivered into the vessel 1 as slit air through the above-described annular slit 4. The air conditioner 7 includes a cooler 7a, a heater 7b provided with a temperature controller and a humidifier 7c.

In order to supply a powder 8 used for granulating into the vessel 1, a screw-feeder type powder supply device 9 is provided for example.

Furthermore, in order to supply a binder liquid 10 used for granulating into the vessel 1, a spray nozzle 13 communicated with a tank 11 through a precision pump 12 which can pump the liquid at constant rate is provided in the vessel 1. The binder liquid 10 from the tank 11 is blown out through the spray nozzle 13 together with high pressure air 14 supplied into the spray nozzle 13.

Further, a product discharging device 15 for taking out the granulated products is provided in the vicinity of the bottom of the vessel 1.

Furthermore, a cover 16 is provided at the top of the vessel 1.

Further, in this embodiment, a program controller 17 is provided for program-controlling the powder supply device 9 and the binder liquid supply device such as the precision pump 12 so that the powder 8 and the binder liquid 10 are supplied in such a manner that the liquid/solid ratio on the surfaces of particles as nuclei has a value satisfying a given program, said liquid/solid ratio being obtained by calculation considering moisture supplied into the vessel 1 by air delivered into the vessel 1 and moisture escaping from the vessel 1 along with the discharge of the air.

Hereunder, operation of this embodiment will be described.

First, in operating the granulating and coating, the particles as the nuclei are charged into the vessel 1. Then, the rotary shaft 3 is rotated by a driving source, not shown, to rotate the rotary disk 2, and, air is supplied into the vessel 1 from the blower, not shown, through the prefilter 6, the air conditioner 7, the air chamber 5 and the slit 4, while the powder 8 is supplied from the powder supply device 9 and the binder liquid 10 is supplied from the tank 11 through the spray nozzle 13, into the vessel 1.

With these operations, the particles are centrifugally fluidized or centrifugally tumbled on the rotary disk 2, and granulating and coating are performed with the powder 8 and the binder liquid 10.

During this process, in this embodiment, the powder supply device 9 and the binder liquid supply device such as the precision pump 12 are controlled by the program controller 17 to supply the powder 8 and the binder liquid 10 in such a manner that the liquid/solid ratio on the surface of the particle as the nucleus has a value satisfying the given program, said liquid/solid ratio being obtained by calculation considering the moisture supplied into the vessel 1 by air delivered into the vessel 1 and the moisture escaping from the vessel 1 along with the discharge of the air from the vessel 1.

As a result, in the granulating apparatus of this embodiment, the satisfactory granulating products having a uniform particle diameter can be manufactured at the optimal liquid/solid ratio.

### (Example 1)

As nuclei, 20 kg of granulated sugar having a mean diameter of 270 µ m is charged into the centrifugal fluidizing type coating apparatus (CF-1300 manufactured by Freund Industrial Co., Ltd.) provided with a program controller in accordance with the present invention as shown in Fig. 1, and air is delivered through the slit formed between the inner wall of the vessel and the edge portion of the rotary disk while the rotary disk is rotated at 80 rpm, and the powder sugar having a mean diameter of 21 µ m is supplied from the powder supply device while 50 % by weight solution of sucrose syrup is sprayed from the spray nozzle.

At this time, the air delivered into the vessel is adjusted in such a manner that air from the blower is dehumidified through the cooler, and subsequently, controlled to the temperature 29° ± 1°C and the moisture 37.5±0.5 % by the heater having the temperature controller and by the humidifier. The air supplying rate is gradually increased from the first 3.5 m³/min to the last 4.5 m³/min.

The supply of the syrup is gradually increased from the first 150 ml/min to the last 300 ml/min, while the powder sugar is added in quantity calculated in accordance with a program taking the moisture supplied with the delivered air and the moisture discharged with the exhausted air into consideration, the liquid/solid ratio being made to change in the order of 0.19, 0.23, 0.24, 0.22, 0.21, 0.19, 0.20 and 0.23 every ten minutes, and thus supplying the powder in the total quantity of 118 kg in 80 minutes.

By this method, satisfactory spherical particles having a particle diameter of 500 - 710 µ m were obtained at a yield of 92.2 %.

### (Example 2)

Same method as Example 1 is employed except that 30 kg of granulated sugar having a mean particle diameter 256 µ m was charged as the nuclei, the temperature and the moisture of the delivered air were set at 35° ± 1°C and 36±1 % respectively, and the liquid/solid ratios were programed in the order of 0.20, 0.22, 0.23, 0.23, 0.22, 0.20, 0.19 and 0.19. According to this method, the satisfactory spherical particles having a particle diameter of 350 - 500 µ m were obtained at a yield of 90.1 %,

### (Example 3)

The same method as Example 1 is employed except that, in this program, the liquid/solid ratio was set at a constant value of 0.20.

The satisfactory spherical particles having a particle diameter of 500 - 710 µ m were obtained at a yield of 88.2 %.

### (Comparative Example 1)

The same method as Example 3 was employed except that air was directly delivered from the blower and the control of the liquid/solid ratio was made without taking the moistures supplied with the delivery air and discharged with the exhausted air into consideration. As a result, satisfactory granulating was not performed, and the particles having a particle diameter of 500 - 710 µ m were obtained at a yield of 60.5 %.

### (Comparative Example 2)

The same method as Example 3 was employed except that the moistures supplied with the delivery air and discharged with the exhausted air were not considered for controlling the liquid/solid ratio. As a result, many uncoated particles were produced, and the particles having a particle diameter of 500 - 710 µ m were obtained at a yield of 71.4 %.

### (Comparative Example 3)

The same method as the Comparative Example 2 was employed except that the liquid/solid ratio was set at 0.21. Products were obtained at a yield of 76.7 %.

### (Comparative Example 4)

The granulating was performed for 95 minutes in such a manner that air is directly delivered from the blower and syrup as a binder and powder sugar were suitably supplied in accordance with the observed conditions inside the vessel. Particles having a particle diameter of 500 - 710 µ m were obtained at a yield of 87.1 %. This method required the skill, and it was necessary for a worker to always monitor and adjust the production conditions.

Hereinabove, the invention made by the present inventors has been described in detail with reference to the examples, however, the present invention should not be limited to the above examples, and, various modifications can be made without departing from the scope of the present invention.

The following is the brief description of the effects obtainable by the typical ones out of the inventions disclosed in the specification.
(1) The granulating is performed constantly at the suitable liquid/solid ratio, so that the satisfactory granulating products having a uniform particle diameter can be obtained.
(2) The liquid/solid ratio is controlled by a predetermined program, so that the whole process can be program-controlled as desired without requiring to use a wetness detector and the like having many problems in the practical use.

## Claims

1. A method of granulating, wherein, at a bottom of a granulating vessel being circular in horizontal section, a rotary disk having a circular edge portion concentric with the circle of the section of the granulating vessel is provided,
said rotary disk is rotated while a gas is delivered into said vessel through a slit formed between an inner wall of the vessel and the edge portion of the rotary disk, and
a powder and a binder liquid are supplied into the vessel while particles as nuclei are centrifugally fluidized, thus performing granulation,
characterized in that:
the powder and the binder liquid are supplied in such a manner that a liquid/solid ratio on surfaces of the particles as nuclei has a value satisfying a given program, said liquid/solid ratio being calculated considering a moisture supplied into said vessel with the gas delivered into the vessel and a moisture discharged from said vessel along with the the gas exhausted from the vessel.

2. The granulating method as set forth in claim 1, wherein a temperature and a moisture of the gas delivered into said vessel are maintained at substantially predetermined levels.

3. The granulating method as set forth in claim 1, wherein one of said powder and said binder liquid is supplied in accordance with a predetermined program.

4. The granulating method as set forth in claim 2, wherein said powder and said binder liquid are supplied in accordance with the predetermined program.

5. The granulating method as set forth in claim 1, wherein said powder and said binder liquid are continuously supplied.

6. The granulating method as set forth in claim 5, wherein supplying rates of said powder and said binder liquid are constant.

7. The granulating method as set forth in claim 5, wherein the supplying rates of said powder and said binder liquid increase continuously or sepwise according to the program.

8. A granulated article obtained by the method according to claim 1.

9. A granulating-coating apparatus, comprising:
a granulating vessel (1) of a cylindrical construction having a circular horizontal section, into which particles as nuclei are charged and a powder and a binder liquid are supplied into for granulation;
a rotary disk (2) horizontally provided on a bottom of the vessel, and rotatable about a rotary shaft (3); a circular edge portion (2a) of the rotary disk (2) being concentric with the circle of the horizontal section of the vessel (1);
an annular slit (4) formed between the edge portion (2a) of the rotary disk (2) and the inner wall of the vessel (1);
an air conditioner (7) which control a temperature and a moisture of a gas delivered into the vessel (1) through the annular slit (4);
a powder supply means (9) for supplying the powder into the vessel (1);
a binder liquid supplying means (13) for supplying the binder liquid into the vessel (1); and
a program controller (17) for program-controlling the powder supply means (9) and the binder liquid supply means (13) so that the powder and the binder liquid are supplied in such a manner that a liquid/solid ratio on surfaces of the particles as nuclei has a value satisfying a given program, said liquid/solid ratio being obtained by calculation considering moisture supplied into the vessel (1) by the gas delivered into the vessel (1) and moisture escaping from the vessel (1) along with the discharge of the gas.
